# EUROPÄISCHE PATENTANMELDUNG

(11) **EP 1 486 811 A1**
(43) Veröffentlichungstag der Anmeldung: **15.12.2004**
(21) Anmeldenummer: 04102084.3
(22) Anmeldetag: 13.05.2004
(51) Int. Cl.: G02B 21/06, G02B 27/00, G02B 5/00

(54) **Mikroskop mit mindestens einem Strahlteiler und einem streulichtreduzierenden Mittel**

(30) Priorität: 13.06.2003 DE 10327113
(71) Anmelder: Leica Microsystems Wetzlar GmbH, 35578 Wetzlar (DE)
(72) Erfinder: Weiss, Albrecht, 35440 Linden (DE)
(74) Vertreter: Reichert, Werner F., Dr.

(57) **Zusammenfassung**

Ein Mikroskop mit mindestens einem Strahlteiler (3;19) im Mikroskopstrahlengang und einem streulichtreduzierenden Mittel weist erfindungsgemäß als streulichtreduzierendes Mittel eine Schwarzglasplatte (6) auf, die eine polierte Oberfläche aufweist, auf welcher eine Antireflex-Beschichtung (7) aufgebracht ist. Vorzugsweise ist die Schwarzglasplatte (6) mit geringer Neigung gegenüber der Richtung des einfallenden Beleuchtungsstrahls (2) hinter dem Strahlteiler (3;19) angeordnet, so dass ein an der Schwarzglasplatte (6) entstehender Restreflex (8) über den Strahlteiler (3;19) aus dem Strahlengang herausreflektiert wird.

## Beschreibung

Die Erfindung betrifft ein Mikroskop mit mindestens einem Strahlteiler und einem streulichtreduzierenden Mittel.

Bei Mikroskopen mit einem Auflichtbeleuchtungsstrahlengang und einem Abbildungsstrahlengang wird die Auflichtbeleuchtung über einen Strahlteilerspiegel eingekoppelt. Bei Fluoreszenzmikroskopen ist dies üblicherweise ein dichromatischer Strahlteiler. Bei anderen Auflichtverfahren in der Mikroskopie, wie beispielsweise dem Hellfeldverfahren, dem Polarisationsverfahren oder dem differenziellen Interferenzkontrast (DIC), ist der Strahlteiler ein Neutralteiler mit einem Reflexions- bzw. Transmissionsvermögen von etwa 50 Prozent. Während beim Neutralteiler etwa 50 Prozent des auftreffenden Lichts den Strahlteiler passieren, wird beim dichromatischen Strahlteiler nur ein sehr geringer Anteil des Anregungslichtes vom Strahlteiler durchgelassen.

Das Licht, was den Strahlteiler passiert, trifft dann auf die hinter dem Strahlteiler angeordnete Wand, kann dort je nach Wandmaterial teilweise absorbiert, reflektiert oder gestreut werden und kann schließlich als störender Untergrund bis ins Okular oder den Kameraausgang des Mikroskops gelangen. Dieses beeinträchtigt die Bildqualität erheblich.

Aus der DE 19 926 037 A1 ist ein Mikroskop mit mindestens einem Strahlteiler in einem Strahlteilerwürfel bekannt, welches insbesondere zur Untersuchung von fluoreszierenden Proben vorgesehen ist. Die Rückwand hinter dem Strahlteiler ist entfernt und der Strahlteilerwürfel somit offen. Außerhalb des Strahlteilerwürfels ist ein reflektierender Kegelmantel angeordnet, auf den das durch den Strahlteiler hindurchtretende Licht auftrifft, sodass es aus dem Strahlengang herausreflektiert wird. Es wird ein Revolver mit mehreren darauf angeordneten Strahlteilerwürfeln beschrieben, in dessen Mitte ein reflektierender Kegelmantel angeordnet ist. Dadurch muss der Revolver entsprechend groß ausgelegt werden. Da der Strahlteilerwürfel offen ist, kann Staub in den Strahlteilerwürfel eindringen und sich auf der Rückseite des Strahlteilers absetzen. Dort wird es direkt angestrahlt und erzeugt einen zusätzlichen Streulichtanteil.

In der JP 2000-75207 A wird ein Fluoreszenzmikroskop mit einem streulichtreduzierenden Mittel beschrieben. Hinter einem Strahlteiler, der zugleich als Anregungsfilter dient, wird das durchgehende, unerwünschte Licht auf eine außerhalb des Strahlteilerwürfels angeordnete Lichtfalle gerichtet. Dieses besteht aus einem hohlförmigen, konischen Körper, in dem das einfallende unerwünschte Licht durch Mehrfachreflexionen verschluckt wird. Diese Lichtfalle erfordert erheblichen Einbauraum neben dem eigentlichen Strahlteilerwürfel. Außerdem ist auch diesem Aufbau der Strahlteilerwürfel offen, so dass Staub in den Strahlteilerwürfel gelangen und einen zusätzlichen Streulichtanteil erzeugen kann.

Es ist daher Aufgabe der vorliegenden Erfindung, ein Mikroskop mit streulichtreduzierenden Mittel anzugeben, welche eine besonders kompakte Bauform und zugleich eine sehr gut streulichtreduzierende Wirkung aufweisen.

Diese Aufgabe wird gelöst durch ein Mikroskop mit mindestens einem Strahlteiler im Mikroskopstrahlengang und einem streulichtreduzierenden Mittel, welches erfindungsgemäß dadurch gekennzeichnet ist, dass das streulichtreduzierende Mittel als eine Schwarzglasplatte ausgebildet ist, die eine polierte Oberfläche aufweist, auf welcher eine Antireflex-Beschichtung aufgebracht ist. Vorteilhafte Ausgestaltungen sind in den Unteransprüchen angegeben.

In dem vorgeschlagenen Mikroskop wird das durch den Strahlteiler hindurchgehende Licht nicht an der Rückwand des Strahlteilerwürfels gestreut, wie aus dem Stand der Technik bekannt. Statt dessen wird das durch den Strahlteiler hindurchgehende Licht in der Schwarzglasplatte extrem absorbiert, wobei durch die Antireflex-Beschichtung lediglich ein sehr geringer Restreflex entsteht, der durch Strahlteiler in den Beleuchtungsstrahlengang zurückgeworfen wird. Durch die polierte Oberfläche der Schwarzglasplatte ist sichergestellt, dass ausschließlich eine Reflexion und kein Streuung auftritt.

In einer vorteilhaften Ausführungsform ist die Schwarzglasplatte mit geringer Neigung ihrer Flächennormalen gegenüber der Richtung des einfallenden Lichts hinter dem Strahlteiler angeordnet. Der an der Schwarzglasplatte entstehender geringe Restreflex wird durch die Schrägstellung des Schwarzglasplatte unter einem kleinen Winkel schräg in Richtung Strahlteiler reflektiert. Der Restreflex gelangt zurück zum Strahlteiler und wird, entsprechend seiner Strahlteiler-Eigenschaften, anteilig von diesem aus dem Mikroskopstrahlengang herausreflektiert. Der nicht am Strahlteiler reflektierte Anteil des Restreflexes geht durch den Strahlteiler hindurch zurück in den Beleuchtungsstrahlengang.

Der Winkel, um den die Flächennormale der Schwarzglasplatte gegenüber der Richtung des einfallenden Lichts geneigt ist, hängt beispielsweise von den Brennweiten der Tubusoptik und der Bildfeldgröße ab. In Abhängigkeit von diesen Daten haben sich Winkelwerte von ungefähr 2 Grad als mindestens erforderlich erwiesen, damit sichergestellt ist, dass der Restreflex nicht in die Kamera und die Okulare gelangt.

Die Schrägstellung der Schwarzglasplatte gegenüber der Richtung des einfallenden Lichts ist insbesondere bei Strahlteilern in sogenannten Fluoreszenzwürfeln mit einem Anregungsfilter und einem Sperrfilter von Vorteil, wenn es sich bei dem Anregungsfilter um ein Filter zur Multiband-Fluoreszenz-Anregung mit mehreren spektralen Fluoreszenzbanden handeln. In diesem Fall weist das zugehörige Multiband-Sperrfilter ebenfalls eine Multiband-Charakteristik auf, um die verschiedenen Anregungsbanden des Anregungsfilters auszulöschen. Diese Auslöschung ist bei einem Multiband-Sperrfilter jedoch nicht so gut wie bei einem Einzelband-Sperrfilter, das auf ein Einzelband-Anregungsfilter abgestimmt ist. Bei Einzelband-Sperrfilter ist die Auslöschung nahezu 100 %, während sie bei einem Multiband-Sperrfilter deutlich schlechter ist, so dass noch Anteile des Anregungslichts zum Okular und zum Kameraausgang gelangen können. Daher ist insbesondere bei einer Multiband-Fluoreszenz-Anregung eine Schrägstellung der Schwarzglasplatte gegenüber der Richtung des einfallenden Lichts vorteilhaft, da hierdurch der an der Schwarzglasplatte entstehende Restreflex zuverlässig aus dem Abbildungsstrahlengang herausreflektiert wird, so dass kein störendes Licht zum Okular und zum Kameraausgang gelangen kann.

In einer besonders kompakten Bauform ist die Schwarzglasplatte zusammen mit dem Strahlteiler in einen Strahlteilerwürfel integriert. Zusätzlich kann der Strahlteilerwürfel staubdicht geschlossen ausgebildet sein. Der Strahlteilerwürfel kann für verschiedene Verfahren der Mikroskopie ausgelegt sein. So kann beispielsweise der Strahlteilerwürfel als ein Hellfeld-Würfel ausgebildet sein, in dem lediglich ein Strahlteiler angeordnet ist. In einer anderen Ausgestaltung ist der Strahlteilerwürfel als ein Fluoreszenzwürfel ausgebildet, in dem außer dem Strahlteiler ein Anregungsfilter und ein Sperrfilter angeordnet sind. In einer weiteren Ausgestaltung ist der Strahlteilerwürfel als ein Polarisationswürfel ausgebildet, in dem außer dem Strahlteiler ein Polarisator und ein Analysator angeordnet sind.

In einer besonders vorteilhaften Ausgestaltung des Mikroskops sind mehrere Strahlteilerwürfel auf einem drehbaren Revolver oder einem Schiebe-Element angeordnet, so dass sie wahlweise abwechselnd in den Mikroskopstrahlengang reversibel einfügbar sind. Dabei kann es sich um unterschiedliche Strahlteilerwürfe der beschrieben Arten handeln.

Nachfolgend wird die Erfindung anhand der schematischen Zeichnung naher erläutert. Es zeigen:
- ***Fig. 1:***: einen Strahlteilerwürfel für eine Hellfeld-Anwendung des Mikroskops;
- ***Fig. 2:***: ein Fluoreszenz-Mikroskop mit einem Fluoreszenzwürfel.

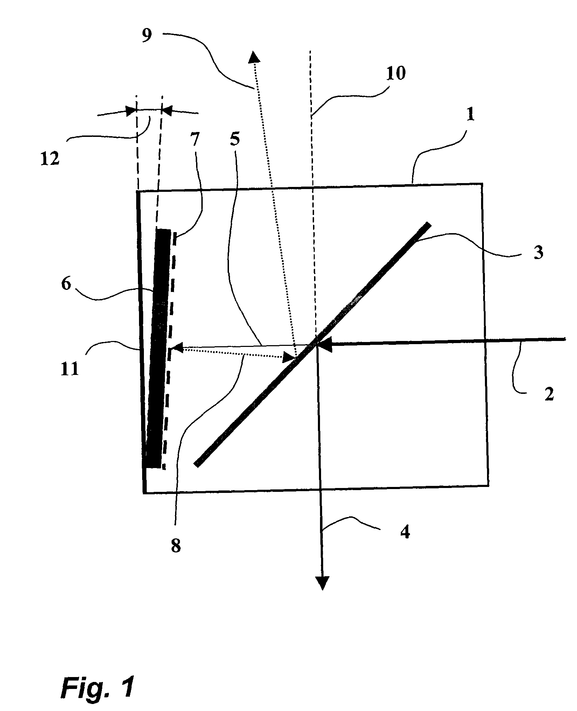

***Fig. 1*** zeigt einen Strahlteilerwürfel 1 für eine Hellfeld-Anwendung eines nicht weiter dargestellten Mikroskops. Von rechts tritt ein Beleuchtungsstrahl 2 eines nicht dargestellten Beleuchtungsstrahlengangs in den Strahlteilerwürfel 1 ein. Der Beleuchtungsstrahl 2 trifft auf einen Strahlteiler 3, an dem ein reflektierter Strahl 4 zum beobachteten Objekt (nicht dargestellt) abgelenkt wird. Ein durchgehender Strahl 5 wird von dem Strahlteiler 3 durchgelassen. Er trifft auf eine schrägstehende Schwarzglasplatte 6 mit einer polierten Oberfläche, auf der eine Antireflex-Beschichtung 7 homogen und flächig aufgebracht ist. Die polierte Oberfläche bewirkt, dass ausschließlich eine Reflexion und keine Streuung auftritt. Die Antireflex-Beschichtung 7 der Oberfläche der Schwarzglasplatte 6 bewirkt, dass nur ein sehr geringer Anteil, nämlich unter 1 %, des auf die schrägstehende Schwarzglasplatte 6 auftreffenden Strahls 5, reflektiert wird.

Die Schwarzglasplatte 6 ist um einen kleinen Neigungswinkel 12 gegenüber der Rückwand 11 des Strahlteilerwürfel 1 geneigt angeordnet. Dies ist gleichbedeutend mit der Neigung der Flächennormalen der Schwarzglasplatte 6 gegenüber dem durchgehender Strahl 5.

Durch die Schrägstellung der Schwarzglasplatte 6 um wenige Grad wird der sehr geringe Restreflex 8 unter einem kleinen Winkel reflektiert und trifft schräg zurück auf den Strahlteiler 3. Der Restreflex 8 gelangt zurück zum Strahlteiler 3 und wird, entsprechend dessen Strahlteiler-Eigenschaften, anteilig von diesem aus dem Mikroskopstrahlengang herausreflektiert. Der nicht am Strahlteiler 3 reflektierte Anteil des Restreflexes 8 geht durch den Strahlteiler 3 hindurch zurück in den Beleuchtungsstrahlengang, dem Beleuchtungsstrahl 2 entgegen.

Der Restreflex 8 wird vom Strahlteiler 3 unter einem solchen Winkel reflektiert, dass dieser vom Strahlteiler reflektierte Restreflex 9 nicht mehr der optischen Achse 10 des Mikroskops folgt und dadurch nicht mehr in das Okular (nicht gezeigt) oder den Kamera-Ausgang (nicht gezeigt) gelangt.

Durch die beschriebene Anordnung und Ausgestaltung der Schwarzglasplatte 6 kann das Untergrund- bzw. Streu-Licht in dem Mikroskop deutlich verringert werden.

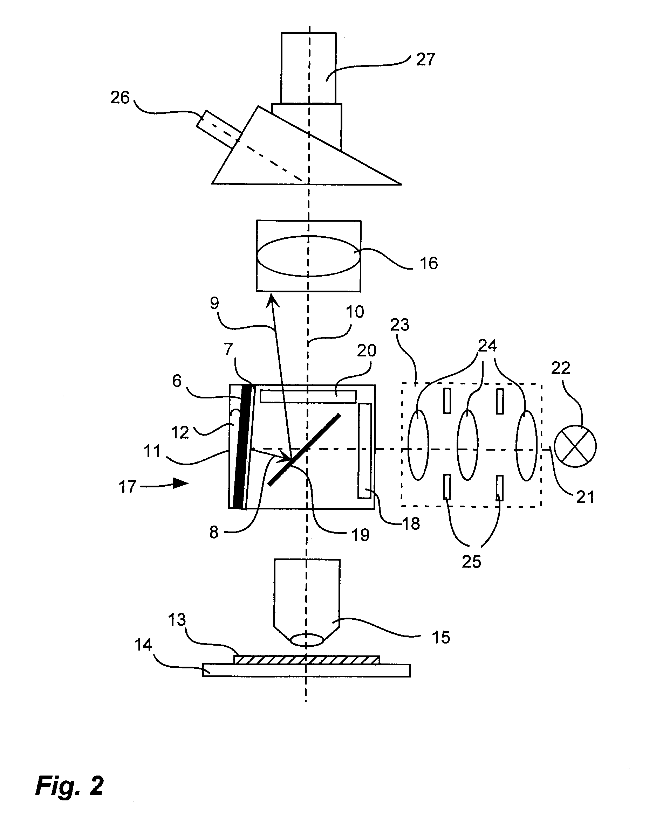

***Fig. 2*** zeigt ein Mikroskop mit einer Fluoreszenzeinrichtung. Eine Probe 13 ist auf einem Mikroskoptisch 14 aufgelegt. Eine Fluoreszenzeinrichtung besteht aus einem Anregungsfilter 18, einem dichromatischen Strahlteiler 19 und einem Sperrfilter 20. Diese Fluoreszenzeinrichtung ist als bauliche Einheit als ein Fluoreszenzwürfel 17 ausgebildet.

Um die Probe 13 mittels der Fluoreszenzeinrichtung untersuchen zu können, wird der Fluoreszenzeinrichtung ein Auflichtstrahlengang 21 zugeführt. Dieser geht von einer Auflicht-Lichtquelle 22 aus und passiert eine Auflicht-Beleuchtungsoptik 23 mit mehren Linsenelementen 24 und Blenden 25. Das Licht des Auflichtstrahlengangs 21 tritt seitlich in den Fluoreszenzwürfel 17 ein und durchläuft das Anregungsfilter 18, welches nur bestimmte spektrale Fluoreszenz-Wellenlängenbereiche des Beleuchtungslicht passieren lässt.

Anschließend wird das Auflicht mittels des Strahlteilers 19 in Richtung des Objektivs 15 umgelenkt und durch das Objektiv 15 auf die Probe 13 gerichtet. Das Auflicht erzeugt in bestimmten, in der Probe 13 eingebrachten Fluorochromen eine Fluoreszenz-Anregung. Von der Probe 13 gelangt das Fluoreszenzlicht durch das Objektiv 15, durch den Strahlteiler 19 und das Sperrfilter 20 in die Tubusoptik 16. Das von dieser erzeugte Bild der Probe 13 kann mittels eines oder mehrerer Okulare 26 betrachtet werden. Außerdem wird das Bild auf eine Kamera 27 abgebildet.

Hinter dem Strahlteiler 19 ist eine Schwarzglasplatte 6 mit einem geringen Neigungswinkel 12 ihrer Flächennormalen gegenüber der Richtung des durch den Strahlteiler 19 einfallenden Lichts angeordnet. Die Schwarzglasplatte 6 weist eine polierte Oberfläche auf, auf welche eine Antireflex-Beschichtung 7 aufgebracht ist. Durch die polierte Oberfläche ist sichergestellt, dass ausschließlich eine Reflexion und kein Streuung auftritt. Das durch den Strahlteiler 19 hindurchgehende Licht 5 wird in der Schwarzglasplatte 6 extrem absorbiert und lediglich ein sehr geringer Restreflex 8 unter einem kleinen Winkel reflektiert.

Durch die geringe Schrägstellung der Schwarzglasplatte 6 gelangt der äußerst geringe Restreflex 8 schräg zurück auf den Strahlteiler 19. Er wird von dem Strahlteiler 19 dann unter einem Winkel reflektiert, so dass dieses Restlicht 9 von der optischen Achse 10 des Mikroskops weggelenkt wird und nicht mehr in das Okular 26 oder die Kamera 27 gelangt.

Grundsätzlich kann die Schwarzglasplatte 6 in Einzelband-Fluoreszenz-Anordnungen auch ohne Neigung angeordnet sein, da das Sperrfilter die spektralen Anregungsbänder des Anregungsfilters nicht durchlässt. Demgegenüber ist bei allen Multiband-Fluoreszenz-Anregungen, Hellfeld-Würfeln, bei Würfeln für Differentiellem Interferenzkontrast (DIC) sowie bei Polarisationswürfeln eine zusätzliche Schrägstellung der Schwarzglasplatte 6 von deutlichem Vorteil und führt zu verbesserter Restreflexminderung.

### Bezugszeichenliste

- 1.: Strahlteilerwürfel
- 2.: Beleuchtungsstrahl
- 3.: Strahlteiler
- 4.: reflektierter Strahl
- 5.: Strahl
- 6.: Schwarzglasplatte
- 7.: Antireflex-Beschichtung
- 8.: Restreflex
- 9.: vom Strahlteiler reflektierter Restreflex
- 10.: optische Achse
- 11.: Rückwand des Strahlteilerwürfels
- 12.: Neigungswinkel
- 13.: Probe
- 14.: Mikroskoptisch
- 15.: Objektiv
- 16.: Tubusoptik
- 17.: Fluoreszenzwürfel
- 18.: Anregungsfilter
- 19.: dichromatischer Strahlteiler
- 20.: Sperrfilter
- 21.: Auflichtstrahlengang
- 22.: Auflicht-Lichtquelle
- 23.: Auflicht-Beleuchtungsoptik
- 24.: Linsenelemente
- 25.: Blenden
- 26.: Okulare
- 27.: Kamera

## Patentansprüche

1. Mikroskop mit mindestens einem Strahlteiler (13;19) im Mikroskopstrahlengang und einem streulichtreduzierenden Mittel, **dadurch gekennzeichnet,**
**dass** das streulichtreduzierende Mittel als eine Schwarzglasplatte (6) ausgebildet ist, die eine polierte Oberfläche aufweist, auf welcher eine Antireflex-Beschichtung (7) aufgebracht ist.

2. Mikroskop nach Anspruch 1, **dadurch gekennzeichnet,**
**dass** die Schwarzglasplatte (6) mit geringer Neigung gegenüber der Richtung eines einfallenden Beleuchtungsstrahls (2) hinter dem Strahlteiler (3;19) angeordnet ist, so dass ein an der Schwarzglasplatte (6) entstehender Restreflex (8) über den Strahlteiler (3;19) aus dem Mikroskopstrahlengang herausreflektiert wird.

3. Mikroskop nach einem der Ansprüche 1 oder 2, **dadurch gekennzeichnet,**
**dass** die Schwarzglasplatte (6) zusammen mit dem Strahlteiler (3;19) in einen Strahlteilerwürfel (1) integriert ist.

4. Mikroskop nach Anspruch 3, **dadurch gekennzeichnet,**
**dass** die Schwarzglasplatte (6) zusammen mit dem Strahlteiler (3;19) in einen Strahlteilerwürfel (1) integriert ist und der Strahlteilerwürfel (1) staubdicht geschlossen ausgebildet ist.

5. Mikroskop nach Anspruch 3, **dadurch gekennzeichnet,**
**dass** Strahlteilerwürfel (1) als ein Hellfeld-Würfel ausgebildet ist, in dem lediglich ein Strahlteiler (3) angeordnet ist.

6. Mikroskop nach Anspruch 3, **dadurch gekennzeichnet,**
**dass** der Strahlteilerwürfel (1) als ein Fluoreszenzwürfel ausgebildet ist, in dem außer dem Strahlteiler (19) ein Anregungsfilter (18) und ein Sperrfilter (20) angeordnet sind.

7. Mikroskop nach Anspruch 3, **dadurch gekennzeichnet,**
**dass** der Strahlteilerwürfel (1) als ein Polarisationswürfel ausgebildet ist, in dem außer dem Strahlteiler (3;19) ein Polarisator und ein Analysator angeordnet sind.

8. Mikroskop nach einem der Ansprüche 3 bis 7, **dadurch gekennzeichnet,**
**dass** mehrere Strahlteilerwürfel (1) auf einem drehbaren Revolver oder einem Schiebe-Element angeordnet sind, so dass sie wahlweise abwechselnd in den Mikroskopstrahlengang reversibel einfügbar sind.
